# EUROPEAN PATENT APPLICATION

(11) **EP 3 662 777 A1**
(43) Date of publication of application: **10.06.2020**
(21) Application number: 18842151.5
(22) Date of filing: 03.08.2018
(51) Int. Cl.: A43B 3/00, F21V 33/00

(54) **SHOE STRUCTURE**

(30) Priority: 04.08.2017 CN 201710659800
(71) Applicant: Qingyuan Global Technology Services Ltd., Qingyuan City, Guangdong 511800 (CN)
(72) Inventor: LUH, Yih-Ping, Taipei City 104 (TW)
(74) Representative: dompatent von Kreisler Selting Werner - Partnerschaft von Patent- und Rechtsanwälten mbB
(86) International application number: PCT/CN2018/098567
(87) International publication number: WO 2019/024926

(57) **Abstract**

The present disclosure provides a shoe structure including a sole and an upper connected to the sole, a sensor and a display panel. The upper has an outer surface and an inner surface. The sensor is disposed on the sole or the upper. The display panel is connected to the sensor and disposed on the outer surface. Wherein the display panel is configured to display information according to data detected by the sensor.

## Description

### BACKGROUND OF THE INVENTION

### 1. Field of the Invention

The present disclosure relates to a shoe structure, especially a shoe structure configured to display exercise conditions.

### 2. Description of the Prior Art

Modern people pay more and more attention to healthy living. Keeping an exercise plan, maintaining a healthy and positive lifestyle, keeping one's body fit and healthy are the goals of many. Among which, walking and running are suitable exercises regardless of gender and age.

In order to know whether one's step count or amount of exercise has reached the predetermined amount or one's body condition during an exercise, some people will put on wearable devices to know such information. However, it is not convenient to wear too many devices when exercising.

### SUMMARY OF THE INVENTION

In view of this, the present disclosure intends to provide a shoe structure configured to display information on a display panel according to data detected by sensors so as to provide a shoe structure configured to display diverse information.

The shoe structure includes a sole and an upper connected to the sole, a sensor, and a display panel. The upper has an outer surface and an inner surface; the sensor is disposed on the sole or the upper. The display panel is connected to the sensor and disposed on the outer surface. Wherein, the display panel is configured to display information according to data detected by the sensor.

In an embodiment, the display panel is attached to the outer surface by thermal bonding.

In an embodiment, the display panel is flexible.

In an embodiment, the display panel is an organic light-emitting diode display panel.

In an embodiment, the display panel is a liquid crystal display panel.

In an embodiment, the shoe structure further includes at least one light-emitting element disposed on the sole, wherein the light-emitting element provides a light source to the liquid crystal display panel.

In an embodiment, the shoe structure further includes at least one optical conduction channel disposed on the outer surface, and the light entrance end of the optical conduction channel is disposed corresponding to the light-emitting element.

In an embodiment, there is at least one information which includes step count, walking distance, walking speed, health condition or a combination thereof.

In an embodiment, the display panel is configured to display different colors according to the change of information.

In addition, another shoe structure of the present disclosure includes a sole and an upper connected to the sole, a sensor, a tongue, a shoelace and the display panel. The sensor is disposed on the sole or the upper; the tongue is disposed on the upper; the shoelace is threaded through a plurality of eyelets of the upper; and the shoelace has an optical conducting channel therein; the display panel is disposed on the tongue; the light source of the display panel is provided by the optical conducting channel. The display panel is configured to display information according to data detected by the sensor.

In an embodiment, the optical conduction channel is a plastic optic fiber.

In an embodiment, the optical conduction channel has at least one bending point, and light emitted through the bending point is configured to be a light source required for the display panel.

In an embodiment, the display panel is flexible.

In an embodiment, the display panel is an organic light-emitting diode display panel.

In an embodiment, the display panel is a liquid crystal display panel.

In an embodiment, there is at least one information which includes step count, walking distance, walking speed, health condition or a combination thereof.

In an embodiment, the display panel is configured to display different colors according to the change of information.

Compared to traditional shoes, the shoe structure according to the present disclosure may display information on the display panel according to the data detected by the sensor so as to provide a shoe structure configured to display diverse information.

### BRIEF DESCRIPTION OF THE DRAWINGS

FIG. 1 is a diagram of a shoe structure in an embodiment of the present disclosure.
FIG. 2A and FIG. 2B are diagrams of a shoe structure in another embodiment of the present disclosure.
FIG. 3A to FIG. 3C are diagrams of a shoe structure in another embodiment of the present disclosure.

### DETAILED DESCRIPTION OF THE PREFERRED EMBODIMENT

A plurality of embodiments of the present disclosure are disclosed in detail with reference to FIGs and sentences in the following paragraphs, in order to further understand the techniques of the present disclosure, a plurality of practical details are described together in the following paragraphs. However, it should be understood that these practical details do not have any intention to limit the scope of the present disclosure. In addition, for the purpose of clarification, some current structures and elements are illustrated simply in figures.

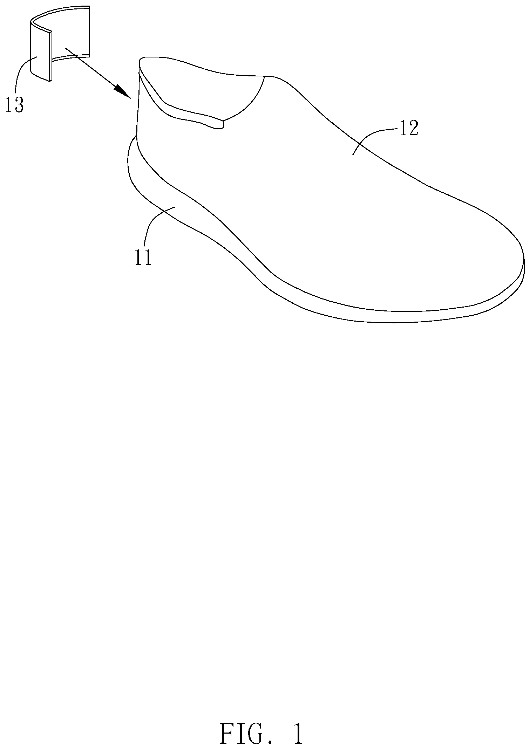

Please refer to FIG. 1. A shoe structure 1 includes a sole 11 and an upper 12 connected to the sole 11, a sensor (not illustrated), and a display panel 13. The upper 12 has an outer surface and an inner surface. Specifically, the outer surface is a surface opposite to the insteps of a human body, the inner surface is a surface facing the insteps of a human body.

The sensor (not illustrated) may be disposed on the upper 12 or the sole 11, but not limited thereto. The sensor, for example, may be a vibration sensor, a pulse sensor (preferably disposed on the inner surface), a gravity sensor, a gyroscope, an acceleration sensor, etc., but not limited thereto, so as to respectively detect required information such as step count, health condition (such as a heartbeat), walking distance, walking speed, etc..

The display panel 13 is connected to the sensor, and disposed on the outer surface. Specifically, the display panel 13 is flexible, therefore, the display panel 13 may be disposed on any one portion of the outer surface of the upper 12. In another embodiment, the display panel 13 may also be disposed on the side wall of the sole. In the present embodiment, the display panel 13 is an organic light-emitting diode display panel, but not limited thereto, and configured to display information according to the data detected by different sensors. The display panel 13 is attached to the upper 12 (the inner surface or the outer surface) preferably by thermal bonding, but not limited thereto.

In the present embodiment, the display panel 13 may change its display patterns according to different information. For example, the display panel 13 is configured to display different colors according to the difference of step count. In addition to displaying the step count, the panel may display green color when the step count ranges from 1 to 1000; the panel may display yellow color when the step count ranges from 1001 to 5000; the panel may display red color when the step count ranges from 5001 to 10000; the panel may display violet color when the step count is over 10001. It should be noted that the step count and the color displayed based on the walking color in the present embodiment are merely used as an example, and not limited thereto. Take another sensor as an example, the display panel may display the respective representative colors when the heartbeat ranges from 60 to 90 bpm, 91 to 120 bpm, 121 to 150 bpm, and over 151 bpm respectively.

In another embodiment, a network module may also be disposed on the sole or the upper. Data may be uploaded to a cloud storage through the Internet so that users may record, count or analyze the data.

It should be noted that voltage required for the display panel and the sensor in the present embodiment may be supplied using batteries, human power generation or other power supply means, and not limited thereto.

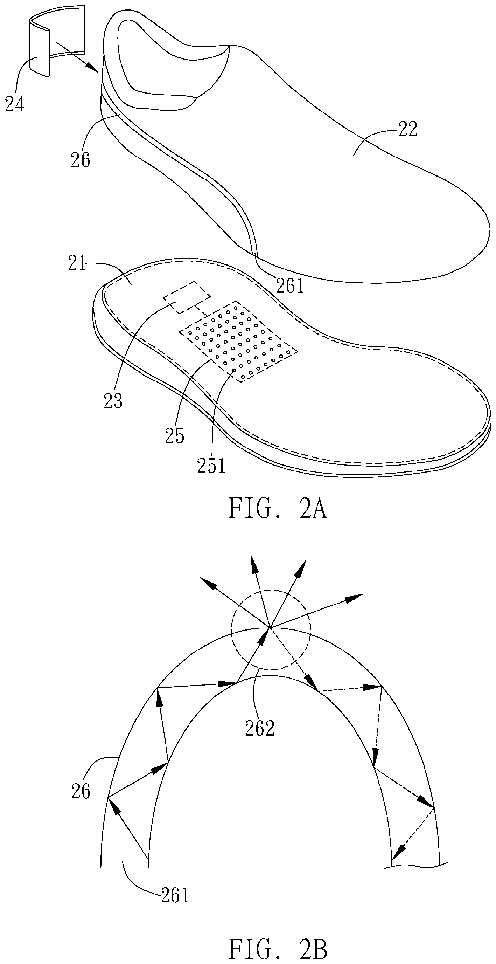

In another embodiment of the present disclosure, please refer to FIG. 2. A shoe structure 2 includes a sole 21, an upper 22, a sensor 23 and a display panel 24. The sole 21 preferably has a light-emitting element 25 which includes a plurality of light sources 251. The light source 251 is preferably a device having high directivity such as a light-emitting diode (LED), a laser diode or other similar light-emitting elements. The way of supplying power may be by batteries, human power generation or other power supply means as in the aforementioned embodiment, and not limited thereto.

The upper 22 includes an optical conduction channel such as a plastic optic fiber 26, which may be inserted in the outer surface of the upper 22 by weaving, or it may also be disposed on the outer surface by insertion or other ways of fastening. Wherein, the light entrance end 261 of the plastic optic fiber 26 is preferably disposed corresponding to the light sources 251 of the light-emitting element 25 so as to enhance the incident rate of the light. The light entrance end 261 may be disposed on any one portion of the upper 22. The present embodiment has only one light entrance end 261 as an example, but not limited thereto. It should be noted that the light will be scattered from the bending point since the total internal reflection of the light is destroyed when the light enters the plastic optic fiber 26 to encounter the bending point of the plastic optic fiber 26. The light scattered from the bending point may be provided to the display panel 24 as a light source. In another embodiment, the other end of the plastic optic fiber 26 opposite to the light entrance end may face the display panel 24 to be treated as a backlight of the display panel 24 to generate an image. In the embodiment, the display panel 24 is a liquid crystal display panel. Other factors such as the types of sensors and the ways of displaying information are the same as those disclosed in the aforementioned embodiment; therefore, they are not repeated herein.

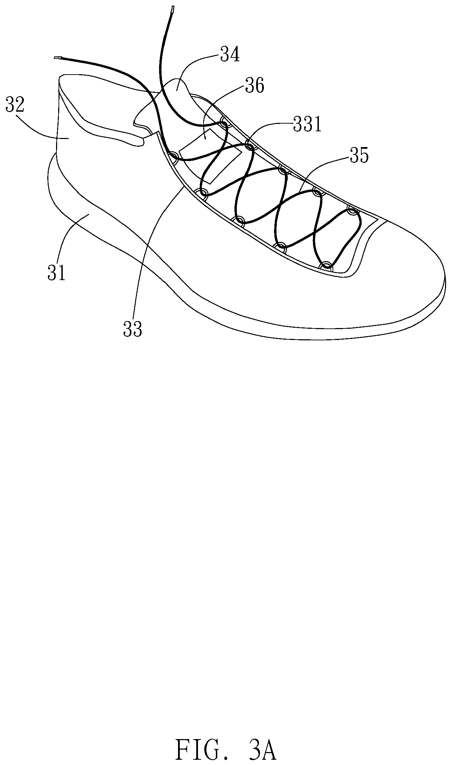

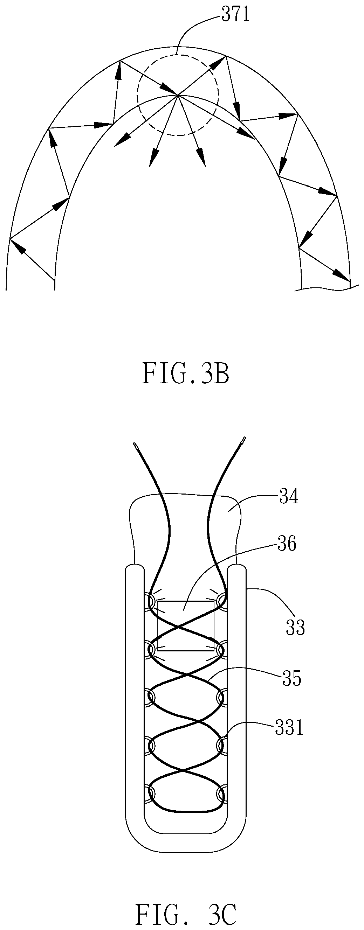

For another embodiment of the present disclosure, please refer to FIG. 3A and FIG. 3B. A shoe structure 3 includes a sole 31, an upper 32, an eyelet 33, an eyelet hole 331, a tongue 34, a shoelace 35, a display panel 36, a sensor (not illustrated) and an optical conduction channel 37 (FIG. 3B). In the present embodiment, the display panel 36 (a liquid crystal display panel or an organic light-emitting diode display panel) is disposed on the tongue 34. The display panel 36 and the tongue 34 are preferably combined by thermal bonding, but not limited thereto. The display panel 36 is electrically connected to the sensor. The optical conduction channel 37, for example, may be a plastic optic fiber, and is preferably weaved into the shoelace 35. The light is scattered from the bending point 371 since the total internal reflection of the light is destroyed when the light enters the plastic optic fiber to encounter the bending point 371 of the plastic optic fiber. The light scattered from the bending point 371 may be provided to the display panel 36 as a light source.

It should be noted that the shoe structure in the present embodiment may also include a light-emitting element (not illustrated), which may be disposed corresponding to the shoelace to enable the light to enter the optical conduction channel so as to provide a light source required for the display panel.

Other elements such as the types of sensor and the way of displaying information are the same as those disclosed in the aforementioned embodiment, therefore they will not be repeated herein.

Compared to traditional shoes, the shoe structure according to the present disclosure may display information on the display panel according to the data detected by the sensor so as to provide a shoe structure configured to display diverse information.

Exemplary embodiments are described in order to further understand features and concepts of the present disclosure, and do not intend to limit the scope of the present disclosure. On the contrary, various equivalent changes, alternations, or modifications are consequently viewed as being embraced by the scope of the present disclosure. Therefore, the scope of the present disclosure should be interrupted widely based on the aforementioned descriptions so as to cover all various equivalent changes, alternations, or modifications based on the claim of the present disclosure.

## Claims

1. A shoe structure, comprising:
a sole and an upper connected to the sole, the upper having an outer surface;
at least one sensor disposed on the sole or the upper; and
a display panel connected to the at least one sensor and disposed on the outer surface,
wherein the display panel is configured to display at least one information according to data detected by the at least one sensor.

2. The shoe structure according to claim 1, wherein the display panel is attached to the outer surface by thermal bonding.

3. The shoe structure according to claim 1, wherein the display panel is flexible.

4. The shoe structure according to claim 3, wherein the display panel is an organic light-emitting diode display panel.

5. The shoe structure according to claim 3, wherein the display panel is a liquid crystal display panel.

6. The shoe structure according to claim 5, further comprising at least one light emitting element disposed on the sole, wherein the light-emitting element provides a light source to the liquid crystal display panel.

7. The shoe structure according to claim 6, further comprising at least one optical conduction channel disposed on the outer surface, wherein a light entrance end of the optical conduction channel is disposed corresponding the at least one light-emitting element.

8. The shoe structure according to claim 1, wherein the at least one information includes a step count, a walking distance, a walking speed, a health condition, or a combination thereof.

9. The shoe structure according to claim 8, wherein the display panel is configured to display different colors according to change of the information.

10. A shoe structure, comprising:
a sole and an upper connected to the sole;
at least one sensor disposed on the sole or the upper;
a tongue disposed on the upper;
a shoelace threaded through a plurality of eyelets of the upper, the shoelace having an optical conduction channel therein; and
a display panel disposed on the tongue, wherein a light source of the display panel is provided by the optical conduction channel,
wherein the display panel is configured to display at least one information according to data detected by the at least one sensor.

11. The shoe structure according to claim 10, wherein the optical conduction channel is a plastic optic fiber.

12. The shoe structure according to claim 10, wherein the optical conduction channel has at least one bending point and a light emitted through the bending point is configured to be a light source required for the display panel.

13. The shoe structure according to claim 10, wherein the display panel is flexible.

14. The shoe structure according to claim 10, wherein the display panel is an organic light-emitting diode display panel.

15. The shoe structure according to claim 10, wherein the display panel is a liquid crystal display panel.

16. The shoe structure according to claim 10, wherein the at least one information includes a step count, a walking distance, a walking speed, a health condition, or a combination thereof.

17. The shoe structure according to claim 16, wherein the display panel is configured to display different colors according to change of the information.
